# EUROPÄISCHE PATENTANMELDUNG

(11) **EP 2 745 909 A1**
(43) Veröffentlichungstag der Anmeldung: **25.06.2014**
(21) Anmeldenummer: 12198304.3
(22) Anmeldetag: 20.12.2012
(51) Int. Cl.: B01D 46/00, B01D 46/10, F01D 25/32

(54) **Dampfsieb**

(71) Anmelder: Siemens Aktiengesellschaft, 80333 München (DE)
(72) Erfinder: Rehme, Olaf, 20148 Hamburg (DE); Trübel, Armin, 91126 Schwabach (DE)

(57) **Zusammenfassung**

Die Erfindung betrifft ein Dampfsieb und ein Herstellungsverfahren für ein Dampfsieb.

Die Erfindung betrifft ein Dampfsieb (1) mit einem skelettartigen Rohrkörper, in welchem zur Ausbildung einer Mantelfläche (7) zumindest zwei schalenförmige Einzelelemente (8) zur Anbringung vorgesehen sind, wobei die zumindest zwei schalenförmigen Einzelelemente (8) mehrere Sieböffnungen (11) aufweisen und wobei die zumindest zwei schalenförmigen Einzelelemente (8) separat austauschbar sind. Zudem betrifft die Erfindung ein Herstellungsverfahren für ein Dampfsieb.

## Beschreibung

Die Erfindung betrifft ein Dampfsieb und ein Herstellungsverfahren für ein Dampfsieb

Ein Dampfsieb ist ein Bauteil innerhalb eines Schnellverschlussventils in Turbomaschinen. Ein Schnellschlussventil erlaubt die schlagartige Unterbrechung einer Rohrströmung. Das Dampfsieb dient dem Schutz des Schnellschlussventils, speziell der beweglichen Teile und der nachfolgenden von in der Strömung mitgetragenen Fremdkörpern, die zum Funktionsausfall des Schnellschlussventils oder zur Beschädigung nachfolgender Anlagenteile, wie beispielsweise den Schaufeln, führen können.

In einer gängigen Ausführungsform besitzt das Dampfsieb eine hülsenartige Gestalt mit einer zylindrischen oder konischen Mantelfläche, der Siebfläche, welche von außen nach innen durchströmt wird. Nachteilig bei der Verwendung der Dampfsiebe ist die Vergrößerung des Strömungswiderstandes der betreffenden Dampfpassage und der hohen Druckverluste in der Strömung. Insbesondere bei einfachen Wickel- und Lochsieben sind sehr hohe Druckverluste zu beobachten, die sich nachteilig auf die Leistung der Dampfturbine auswirken.

Aus der DE 375 304 C ist ein Dampfsieb bekannt, bei welchem ein Siebkörper durch Aufwickeln nebeneinanderliegender Drähte auf eine Filtertrommel hergestellt wird.

Aus der DE 102009007240 A1 ist ein Dampfsieb mit einer korrugierten Siebfläche bekannt.

Dampfsiebe sind jedoch den in einer Dampfturbine vorherrschenden Belastungen, beispielsweise den Schwingungsbelastungen oder den Temperaturschwankungen ausgesetzt. Diese können das Dampfsieb nach einer relativ kurzen Einsatzzeit zerstören.

Das Dampfsieb ist nur sehr eingeschränkt für Reparaturen geeignet. Das Zusetzen der durchströmten Fläche von Fremdpartikeln oder Beschädigungen der Mantelfläche resultieren meist im Tausch des gesamten Dampfsiebs. Zudem steigt der Fertigungsaufwand für eine Mantelfläche mit einer optimierten Durchströmungsfläche unter Verwendung konventioneller Fertigungstechnologien beispielsweise Drehen, Fräsen, Bohren oder Schweißen deutlich an. Dies ist jedoch sehr kostenintensiv.

Es ist daher eine erste Aufgabe der Erfindung ein Dampfsieb anzugeben, welches das zuvor genannte Problem überwindet. Eine zweite Aufgabe liegt in der Angabe eines Herstellungsverfahrens für ein solches Dampfsieb.

Die erste Aufgabe wird gelöst durch die Angabe eines Dampfsiebs, welches einen skelettartigen Rohrkörper aufweist, in welchem zur Ausbildung einer Mantelfläche zumindest zwei schalenförmige Einzelelemente zur Anbringung vorgesehen sind, wobei die zumindest zwei schalenförmigen Einzelelemente mehrere Sieböffnungen aufweisen und wobei die zumindest zwei schalenförmigen Einzelelemente separat austauschbar sind.

Erfindungsgemäß wird damit die Mantelfläche des Dampfsiebes aus mehreren Einzelelementen gebildet. Dies entspricht einem modularen Aufbau. Zumindest die zwei schalenförmigen Einzelelemente können im Schadensfall separat ausgetauscht werden, so dass die anderen Teile des Dampfsiebs bei der Montage bzw. Demontage nicht beschädigt werden. Dadurch können kostenintensive andere Teile des Dampfsiebs erhalten bleiben. Ebenfalls werden Kosten durch Vermeidung des Austauschs des gesamten Dampfsiebs verhindert. Auch kann das Dampfsieb bei Wartungszwecken zerlegt und beispielsweise gesäubert werden. Dadurch kann eine verbesserte Funktionsweise und eine längere Lebensdauer erzielt werden.

Bevorzugt ist die durch die zumindest zwei schalenförmigen Einzelelemente gebildete Mantelfläche geschlossen, so dass die technischen Anforderungen, welche an Dampfsiebe gestellt werden, beispielsweise das Aussieben der Fremdkörper, erfüllt sind.

Der skelettartige Rohrkörper kann zudem zwei Deckflächen aufweisen, die durch zumindest eine die zwei Deckflächen verbindende Längsstrebe auf einem definierten Abstand gehalten werden. Dabei sind selbstverständlich auch mehr Längsstreben vorstellbar. Die zumindest eine Längsstrebe kann durch Fixierelemente an den beiden Deckflächen fixiert sein. Dabei kann es sich hier um eine lösbare Verbindung handeln, so dass im Schadensfall auch die zumindest eine Längsstrebe bzw. die beiden oder eine der beiden Deckflächen separat ausgetauscht werden können, ohne andere Teile des Dampfsiebes bei der Montage bzw. Demontage zu beschädigen. Die schalenförmigen Einzelelemente werden quasi von einer zu beispielsweise Wartungs- oder Reparaturzwecken zerlegbaren "Rahmenkonstruktion" zusammengehalten.

Bevorzugt weist der skelettartige Rohrkörper zumindest eine Zwischenfläche auf, welche durch die zumindest eine Längsstrebe mit den zwei Deckflächen verbunden ist. Dieses ist zumeist parallel zu zumindest einer der beiden Deckflächen. Dadurch kann die Anzahl der schalenförmigen Einzelelemente, welche für die gesamte Mantelfläche benötigt wird, erhöht werden. Bei einem Austausch muss nun ein kleineres, schalenförmiges Einzelelement ausgetauscht werden, wodurch sich eine Kostenreduktion ergeben kann.

Bevorzugt sind die zumindest zwei schalenförmigen Einzelelemente an dem skelettartigen Rohrkörper fixierbar. Hierbei kann es sich um lösbare Verbindungen wie Schrauben und Mutter handeln.

Die zweite Aufgabe wird gelöst durch die Angabe eines Verfahrens zur Herstellung eines Dampfsiebes, welches folgende Schritte umfasst:
- Bereitstellen eines skelettartigen Rohrkörpers,
- Bereitstellen von zumindest zwei schalenförmigen Einzelelementen,
- Ausbilden einer Mantelfläche durch das Anbringen von den zumindest zwei schalenförmigen Einzelelementen an dem skelettartigen Rohrkörper, so dass die zumindest zwei schalenförmigen Einzelelemente separat austauschbar sind.

Die zumindest zwei schalenförmigen Einzelelemente werden bevorzugt durch selektives Laserschmelzen gefertigt.

Um den Fertigungsaufwand der schalenförmigen Einzelelemente niedrig zu halten und gleichzeitig eine gute Durchströmung mit reduziertem Druckverlust zu erreichen, wird das selektive Laserschmelzen als Fertigungsverfahren eingesetzt. Dadurch ergeben sich geringe Fertigungskosten. Vorteilhaft ist zudem, dass die Anzahl der Fertigungsschritte im Vergleich zu konventionellen Herstellungsmethoden für vergleichbare Mantelflächen wesentlich reduziert ist. Dies resultiert aufgrund der hohen Geometriefreiheit und der endkonturnahen Fertigung. Somit ist es zudem möglich die Sieböffnungen der Mantelfläche und die Mantelfläche selber derart zu gestalten, dass eine optimale Strömungsführung mit einem niedrigen Druckverlust erzielt werden kann. Insbesondere kann dieses erzielt werden, indem ein Querschnitt, welcher über die schalenförmigen Einzelelemente der Mantelfläche in Umfangsrichtung gebildet wird, derart ausgestaltet ist, dass das durchströmende Medium sinnvoll umgelenkt und die Strömungsgeschwindigkeit über diesen Querschnitt reduziert wird.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: eine Explosionszeichnung eines erfindungsgemäßen Dampfsiebs, und
- FIG 2:: zeigt ein erfindungsgemäßes Dampfsieb.

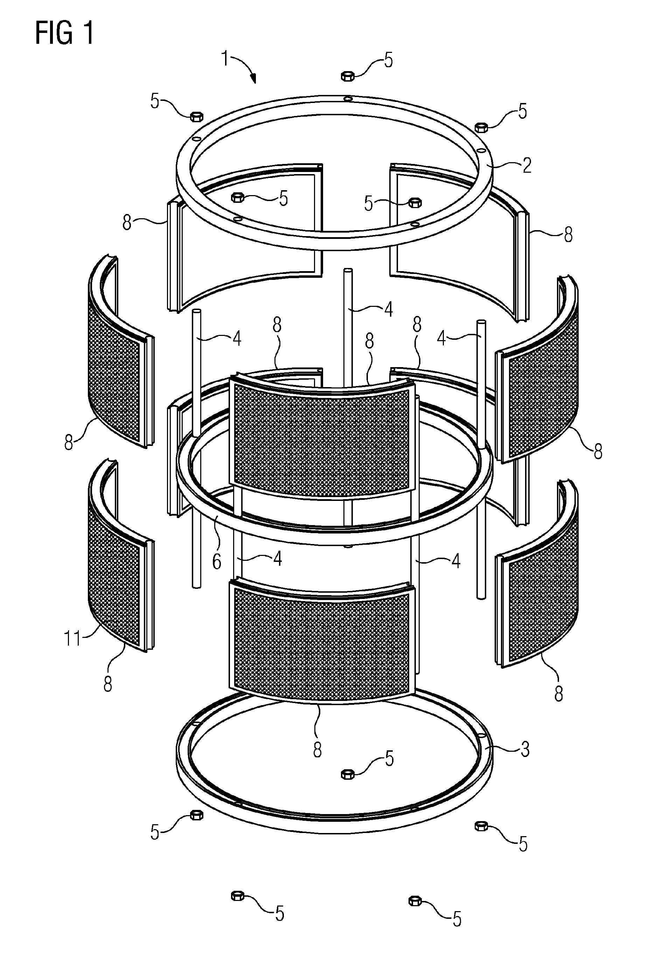

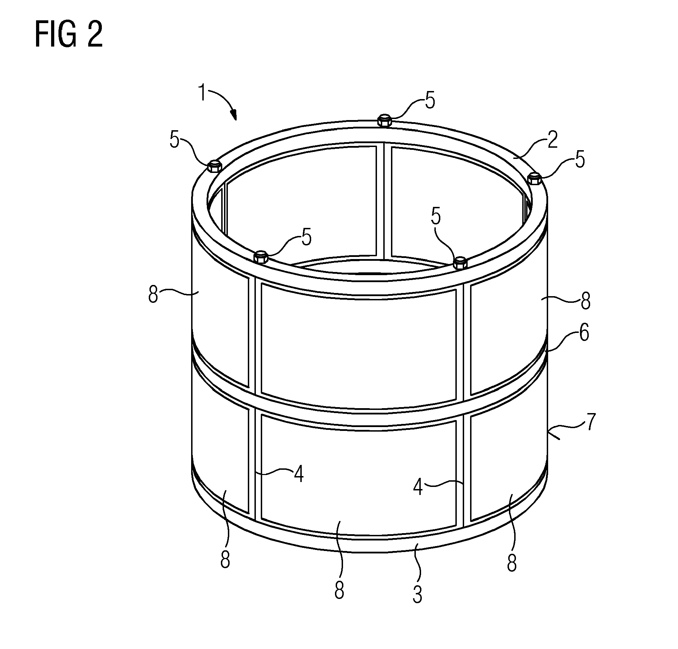

FIG 1 zeigt die Explosionszeichnung eines erfindungsgemäßen Dampfsiebs 1, welches modular gefertigt wird. Dies umfasst einen skelettartigen Rohrkörper, der aus einer oberen Deckfläche 2 und einer unteren Deckfläche 3 besteht. Zusätzlich umfasst der skelettartige Rohrkörper noch fünf Längsstreben 4, die die obere Deckfläche 2 und die untere Deckfläche 3 mit einem vorgegebenen Abstand verbinden. Zur Fixierung der Längsstreben 4 an der Deckflächen 2,3 können noch Fixierelemente 5 verwendet werden. Die Längsstreben 4 können lösbar an den Deckflächen 2,3 angebracht werden, so dass sie im Schadensfall separat ausgetauscht werden können. Selbstverständlich ist auch jede andere Anzahl von Längsstreben 4 möglich. Zusätzlich besitzt der skelettartige Rohrkörper noch eine Zwischenfläche 6, die parallel zu der oberen Deckfläche 2 und der unteren Deckfläche 3 angeordnet ist und durch die fünf Längsstreben 4 mit diesen verbunden sind. Dabei ist die Zwischenfläche 6 aus Steifheitsgründen bevorzugt mittig zwischen der oberen Deckfläche 2 und der unteren Deckfläche 3 angeordnet. Selbstverständlich ist die Anzahl der Zwischenflächen 6 nicht beschränkt, auch kann der skelettartige Rohrkörper überhaupt keine Zwischenfläche 6 aufweisen. Die Mantelfläche 7 (FIG 2) wird nun durch mehrere, schalenförmige Einzelelemente 8, so genannte Kacheln, gebildet. Die schalenförmigen Einzelelemente 8 können mit Hilfe anderer Teile auf eine geeignete Art am skelettförmigen Rohrkörper, das heißt hier an der oberen Deckfläche 2 der unteren Deckfläche 3, der Längsstreben 4 und der Zwischenfläche 6 fixiert werden, so dass eine vollständige, geschlossene Mantelfläche 7 (FIG 2) entsteht. Beispielsweise können die schalenförmigen Einzelelemente 8 in die Deckfläche 2 und in die Deckfläche 3 als auch in die Längsstreben 4 eingeschoben werden. Die schalenförmigen Einzelelemente 8 weisen zudem mehrere Sieböffnungen 11 auf. Die Sieböffnungen 11 können dabei in Lamellenform oder aber Löcher sein oder andere bekannte Sieböffnungen 11. Die schalenförmigen Einzelelemente 8 werden so montiert, dass eine geschlossene Mantelfläche 7 (FIG 2) entsteht, die die technischen Anforderungen, welche ein Dampfsieb 1 aufweisen muss, erfüllt. Zudem werden die schalenförmigen Einzelelemente 8 so montiert, dass im Fall einer Beschädigung, beispielsweise das Zusetzen durch kleine Partikel, die schalenförmigen Einzelelemente 8 separat getauscht werden können. Dadurch können kostenintensive andere Teile des Dampfsiebs 1 erhalten bleiben. Ebenfalls werden Kosten durch Vermeidung des Austauschs des gesamten Dampfsiebes 1 verhindert. Sofern die Längsstreben 4 oder die Zwischenfläche 6 bzw. die obere Deckfläche 2 und/oder die untere Deckfläche 3 ebenfalls lösbar fixiert sind, erlaubt der modulare Aufbau des Dampfsiebes 1 auch ein separates Tauschen dieser Teile. Das Dampfsieb 1 wird dabei modular so zusammengesetzt, dass eine Demontage bzw. Montage einzelner Teile, insbesondere der schalenförmigen Einzelelemente 8, nicht zu einer Beschädigung der anderen Teile des Dampfsiebs 1 führt.

Um den Fertigungsaufwand der Elemente niedrig zu halten und gleichzeitig eine gute Durchströmung mit reduziertem Druckverlust zu erhalten, können die schalenförmigen Einzelelemente 8 mit selektivem Laserschmelzen (SLM) hergestellt werden. Hier werden die schalenförmigen Einzelelemente 8 durch ein schichtenweises Aufbauen aus einem pulverförmigen, metallischen Werkstoff mit Hilfe eines CAD-Modells hergestellt. Dabei wird jede Pulverschicht vor dem Aufbringen der nächsten Pulverschicht mit einem fokussierten Laserstrahl in dem durch die CAD-Daten vorgegebenen Bereich erhitzt und mit der darunterliegenden Schicht verbunden. Durch kontinuierliche Wiederholung des Vorgangs kann so das schalenförmige Einzelelement 8 hergestellt werden. Vorteilhaft hierbei sind die hohe Geometriefreiheit und die endkonturnahe Fertigung. Insbesondere von Vorteil ist auch, dass im Vergleich zu konventionellen Herstellungsmethoden für ein vergleichbares schalenförmiges Einzelelement 8 mit Sieböffnungen 11, die Anzahl der Fertigungsschritte wesentlich reduziert ist, woraus sich eine hohe Kostenreduktion in der Fertigung ergibt.

Die schalenförmigen Einzelelemente 8 der Mantelfläche 7 (FIG 2) mit den Sieböffnungen 11 können durch das selektive Laserschmelzen derart gestaltet werden, dass eine optimale Strömungsführung erzielt werden kann. Dadurch resultiert ein niedrigerer Druckverlust, der zu einem höheren Wirkungsgrad der Dampfturbine führt.
Die Sieböffnungen 11 der schalenförmigen Einzelelemente 8 der Mantelfläche 7 (FIG 2) werden dabei derart gestaltet, dass eine, unter Berücksichtigung von Restriktionen, die in der betreffenden Dampfturbine gelten, optimale Strömungsführung erreicht wird. Insbesondere kann dieses erzielt werden, indem ein Querschnitt, welcher über die schalenförmigen Einzelelemente 8 der Mantelfläche 7 (FIG 2) in Umfangsrichtung gebildet wird, derart ausgestaltet ist, dass das durchströmende Medium sinnvoll umgelenkt und die Strömungsgeschwindigkeit über diesem Querschnitt reduziert wird.

## Patentansprüche

1. Dampfsieb (1)
**gekennzeichnet durch**
einen skelettartigen Rohrkörper, in welchem zur Ausbildung einer Mantelfläche (7) zumindest zwei schalenförmige Einzelelemente (8) zur Anbringung vorgesehen sind, wobei die zumindest zwei schalenförmigen Einzelelemente (8) mehrere Sieböffnungen (11) aufweisen und wobei die zumindest zwei schalenförmigen Einzelelemente (8) separat austauschbar sind.

2. Dampfsieb (1) nach Anspruch 1,
**dadurch gekennzeichnet, dass**
die durch die zumindest zwei schalenförmigen Einzelelemente (8) gebildete Mantelfläche (7) geschlossen ist.

3. Dampfsieb (1) nach einem der vorhergehenden Ansprüche,
**dadurch gekennzeichnet, dass**
der skelettartige Rohrkörper zwei Deckflächen (2,3) aufweist, die durch zumindest eine die zwei Deckflächen (2,3) verbindende Längsstrebe (4) auf einem definierten Abstand gehalten werden.

4. Dampfsieb (1) nach Anspruch 3,
**dadurch gekennzeichnet, dass**
der skelettartige Rohrkörper zumindest eine Zwischenfläche (6) aufweist, welche durch die zumindest eine Längsstrebe (4) mit den zwei Deckflächen (2,3) verbunden ist.

5. Dampfsieb (1) nach Anspruch 4,
**dadurch gekennzeichnet, dass**
die Zwischenfläche (6) parallel zu zumindest einer der zwei Deckflächen (2,3) ist.

6. Dampfsieb (1) nach einem der vorhergehenden Ansprüche,
**dadurch gekennzeichnet, dass**
die zumindest zwei schalenförmigen Einzelelemente (8) an dem skelettartigen Rohrkörper fixierbar sind.

7. Verfahren zur Herstellung eines Dampfsiebes (1) umfassend die Schritte:
- Bereitstellen eines skelettartigen Rohrkörpers,
- Bereitstellen von zumindest zwei schalenförmigen Einzelelementen (8),
- Ausbilden einer Mantelfläche (7) durch das Anbringen von den zumindest zwei schalenförmigen Einzelelementen (8) an den skelettartigen Rohrkörper, so dass die zumindest zwei schalenförmigen Einzelelemente (8) separat austauschbar sind.

8. Verfahren zur Herstellung eines Dampfsiebes nach Anspruch 7,
**dadurch gekennzeichnet, dass**
die zumindest zwei schalenförmigen Einzelelemente (8) durch selektives Laserschmelzen gefertigt werden.
